# NEUE EUROPÄISCHE PATENTSCHRIFT

(11) **EP 0 415 154 B2**
(45) Veröffentlichungstag und Bekanntmachung des Hinweises auf die Entscheidung über den Einspruch: **04.07.2001**
(45) Hinweis auf die Patenterteilung: 19.04.1995
(21) Anmeldenummer: 90115382.5
(22) Anmeldetag: 10.08.1990
(51) Int. Cl.: B07C 5/34, B07C 5/12, G01N 21/90

(54) **Verfahren zum Inspizieren von Gegenständen aus unterschiedlichen Blickwinkeln**
Method for inspecting objects from different viewing angles
Méthode pour inspecter des objets à partir de différents angles visuels

(30) Priorität: 10.08.1989 NL 8902041
(43) Veröffentlichungstag der Anmeldung: 06.03.1991
(73) Patentinhaber: HEUFT SYSTEMTECHNIK GMBH, 56659 Burgbrohl (DE)
(72) Erfinder: Mulder, Harold, NL-7395 ML Teuge (NL)
(74) Vertreter: Abitz, Walter, Dr.-Ing.

(56) Entgegenhaltungen:
- EP-A- 0 124 164
- EP-A- 0 163 330
- DE-A- 2 910 516
- DE-A- 3 611 536
- FR-A- 2 437 616
- GB-A- 2 053 824
- US-A- 28 947
- US-A- 4 655 349
- US-A- 4 691 231

## Beschreibung

Die Erfindung betrifft eine Vorrichtung zur fortlaufenden Inspektion zugeführter gleicher, rotationssymmetrischer, durchsichtiger Gegenstände. Die Vorrichtung weist eine Zuführförderanlage für die Gegenstände mit einer ersten Inspektionsstation zum Inspizieren der Gegenstände und eine Abfuhrförderanlage mit einer zweiten Inspektionsstation zum Inspizieren der Gegenstände unter einem anderen Blickwinkel auf. Die Drehung der Gegenstände erfolgt dabei durch wenigstens zwei Paare von Endlosförderern, die jeden der Gegenstände auf beiden Seiten erfassen, wobei die beiden Endlosförderer mit unterschiedlichen Geschwindigkeiten angetrieben werden und dadurch die Gegenstände um einen vorgegebenen Winkel um ihre Symmetrieachse drehen.

Eine Vorrichtung der eingangs genannten Art ist aus FR-A-2 437 616 bekannt. Die Gegenstände stehen dabei auf einem Transportband, das zugleich als Zufuhrförderanlage und als Abfuhrförderanlage fungiert. Sie werden von dem Transportband zwischen endlosen Bändern hindurchgeführt, die mit unterschiedlicher Geschwindigkeit angetrieben werden, so daß sich die Flaschen um ihre Längsachse drehen. Während der Drehung werden sie dabei von der Seite z.B. durch vier Videokameras unter unterschiedlichen Blickwinkeln inspiziert.

Aus US-A-4 691 231 ist eine Inspektionsvorrichtung bekannt, bei der mehrere Einrichtungen zur Inspektion der Flaschen von der Seite und zusätzlich eine Bodeninspektionseinrichtung vorgesehen sind. Die Gegenstände werden auf einem Transportband stehend an mehreren Inspektionsstationen vorbeigeführt. Zwischen den Inspektionsstationen können die Gegenstände dabei durch Berührung mit einem festen Geländer auf der einen Seite und einem Endlosförderer auf der anderen Seite gedreht werden. Auf demselben Förderband stehend können die Flaschen ferner auch durch eine Bodeninspektionseinrichtung geführt werden, die eine unter dem Förderband angeordnete Kamera aufweist.

Aus US-Re-28 947 ist eine Vorrichtung Tempern von Glaswaren, insbesondere Flaschen, bekannt, bei der die Glaswaren auf einzelnen Bahnen transportiert werden und dabei besprüht werden. Durch Transfereinrichtungen werden sie von einer Bahn auf die nächste übergesetzt. Beim Übersetzen werden sie hängend transportiert, so daß auch der Boden besprüht werden kann. Während des Übersetzens kann ohne Unterbrechung der Bewegung der Glaswaren eine Riß-Erkennung durchgeführt werden kann, indem ein Riß-Detektor innerhalb der Bewegungsbahn der Glaswaren durch die Transfereinrichtung angeordnet wird. Die Glaswaren können beim Durchgang durch die Transfereinrichtung gedreht werden. Die Konstruktion des Riß-Detektors ist im einzelnen nicht angegeben. Ebenso ist nicht angegeben, zu welchem Zwecke die Glaswaren während des Transports gedreht werden.

Aus DE-A-36 11 536 ist eine Vorrichtung zur Überprüfung von Glasflaschen bekannt, bei der zunächst eine grobe Vorkontrolle, dann eine Bodenkontrolle und gegebenenfalls eine Winkelkodierung und schließlich die eigentliche Seitenwandinspektion stattfindet. Bei der Seitenwandinspektion werden die Glasflaschen zwischen einem Geländer und einem seitlichen angreifenden umlaufenden Band zur Drehung gebracht. Wie die Vorkontrolle abläuft, ist nicht angegeben. Es handelt sich hierbei jedenfalls um eine selbständige Prüfung mit eigenem Ausstoßmechanismus. Ob bei der Bodenkontrolle eine Drehung der Glasflaschen stattfindet und, wenn ja, zu welchem Zweck, ist nicht angegeben.

Aus DE-A-26 17 457 ist eine Inspektionsstation bekannt, bei der die Gegenstände mittels eines Systems von vier Spiegeln unter zwei Blickrichtungen betrachtet wird, und beide Bilder in einer einzigen Kamera zusammengeführt werden. Dadurch soll ein Anhalten und ein Drehen der Gegenstände vermieden werden.

Aus GB-A-2 053 824 ist ein Endlosförderer für beliebig geformte Gegenstände bekannt, bei dem die Gegenstände zwischen zwei Förderbändern auf einer Bahn transportiert werden. Innerhalb einer Lücke der Bahn befindet sich ein Druckkopf, eine Zähl- oder Etikettiermaschine oder eine Inspektionseinrichtung. Durch einen Geschwindigkeitsunterschied der seitlichen Transportbänder können die Gegenstände auch gedreht werden. Weder das Ziel einer eventuellen Inspektion noch die Art der Durchführung ist angegeben.

Aus EP-A-0 124 164 ist eine Bodeninspektionseinrichtung bekannt, bei der die Flaschen im Bereich der Bodeninspektionseinrichtung durch Paare von Endlosförderern gehalten und weiterbefördert werden, so daß im Bereich der Bodeninspektionseinrichtung das Förderband unterbrochen ist und damit ein freier vertikaler Weg für den Inspektionslichtstrahl besteht.

Die Erfindung wie sie im Anspruch 1 angegeben ist, löst die Aufgabe, eine Vorrichtung zum fortlaufenden Inspizieren zugeführter gleicher. rotationssymmetrischer Gegenstände zu schaffen, die eine vollständige Inspektion durch die zusammenarbeitenden Inspektionsstationen ermöglicht.

Die Antriebsmittel, insbesondere Motoren, für jeden der Förderer können Schrittmotoren oder servogesteuerte Motoren sein, wodurch mittels einer einfachen programmierbaren Einheit eine sehr große Genauigkeit in bezug auf die erzielte Rotation erhalten werden kann. In der Praxis ist eine maximale Ungenauigkeit von ± 0,2% mit einfachen elektronischen Mitteln und Schrittmotoren kein Problem.

Da die Gegenstände durchsichtig sind, inspiziert jede Inspektionsstation die zwischen der Rotationsachsen und der Inspektionsstation befindliche Wand des Gegenstandes und die auf der anderen Seite der Rotationsachse befindliche Wand. Mit einer Drehung um 90° zwischen zwei nachfolgenden Inspektionsstationen kann damit ein vollständiges Bild von den Gegenständen erhalten werden.

Es sind wenigstens zwei Paare von jeweils zwei endlosen Förderern vorhanden, welche jeweils durch individuelle Antriebsmittel mit Geschwindigkeiten angetrieben werden, die im Zusammenhang mit der Umfangsform der Gegenstände auf der Ebene gewählt sind, an der die Paare der Endlosförderer angreifen.

Die beiden Paare dieser Endlosförderer werden in unterschiedlichen Höhen an den Gegenständen angreifen. Die leicht erzielbare Genauigkeit der gewünschten Geschwindigkeiten gewährleistet dann, daß alle Gegenstände mit ihrer Drehungsachse immer parallel zu sich selbst verstellt werden, also abgesehen von der Translation und der gewünschten Rotation keinerlei andere Lageverstellungen erfahren.

Insbesondere für Gegenstände, die nicht völlig rund sind, kann es vorteilhaft sein, wenn die Paare der endlosen Förderanlagen federnd eindrückbar sind, um sich unrunden Umfangsformen von Gegenständen anzupassen.

Die Vorrichtung kann eine programmierbare Steuerung zur Regelung der Geschwindigkeit aufweisen, mit der die Antriebsmittel die endlosen Förderer antreiben. Um die Differenz zwischen dem Zufuhrförderer und dem Zwischenförderer innerhalb gewisser Grenzen zu halten, beispielsweise in der Größenordnung von maximale einigen Prozenten, wird vorzugsweise ein Geschwindigkeitsgeber verwendet, der ein für die Geschwindigkeit des Zufuhrförderers repräsentatives Signal an die Steuerung abgibt, die aufgrund dieses Signals die Antriebsgeschwindigkeit der endlosen Förderer bestimmt.

Das Rotieren mittels eines Zwischenförderers, der zwei Paare endloser Förderer umfaßt, die in unterschiedlicher Höhe angreifen, hat den Vorteil, daß Pendelbewegungen der Gegenstände vermieden werden. Insbesondere für die Bodeninspektion im Bereich des Zwischenförderers ist dies wegen des genauen Timings der Blitzbeleuchtung vorteilhaft.

Die Vorrichtung der Erfindung bietet eine erheblich höhere Flexibilität. Insbesondere in dem Fall, in dem programmierbare Steuerungen für die einzelnen Antriebe angewandt werden, kann eine hohe Flexibilität und Anpaßbarkeit an verschiedene Gegenstandsformen erhalten wird.

Durch geeignete Anpassung der Geschwindigkeit des Zwischenförderers gegenüber der Geschwindigkeit des Zufuhrförderers kann eine Spationierung oder Despationierung erzielt werden. Die Spationierung wird dadurch realisiert, daß die Geschwindigkeit des Zwischenförderers höher als die Geschwindigkeit des Zufuhrförderers ist; Despationierung im umgekehrten Fall. Die zugeführten Gegenstände drücken im Bereich des Zwischenförderers nicht gegeneinander, werden jedoch dennoch ohne nennenswerten Zwischenraum transportiert werden. Es findet also ein druckloser Transport statt.

Ein Ausgangssignal der Videokameras kann zur Beurteilung der passierenden Gegenstände und zu der auf der Grundlage dieses Signals erfolgenden Ausmusterung dieser Behälter verwendet werden.

Die Steuerung der einzelnen Antriebe kann an Hand einer On-line-Messung der einschlägigen Abmessungen der zu inspizierenden Gegenstände erfolgen.

Die Erfindung wird nun an Hand der beigefügten Zeichnung erläutert. Darin zeigen:
Figur 1 eine Flasche, die von Transportfingern getragen wird und außerdem durch seitlich andrückende endlose Förderer transportiert wird;
Figur 2 eine schematische Draufsicht einer erfindungsgemäßen Vorrichtung mit den Förderern nach Figur 2;
Figur 3 eine teilweise weggebrochene perspektivische Ansicht der mechanischen Konstruktion der Vorrichtung nach Figur 2.

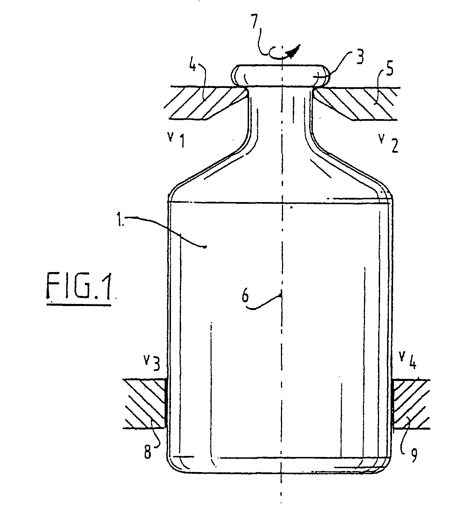

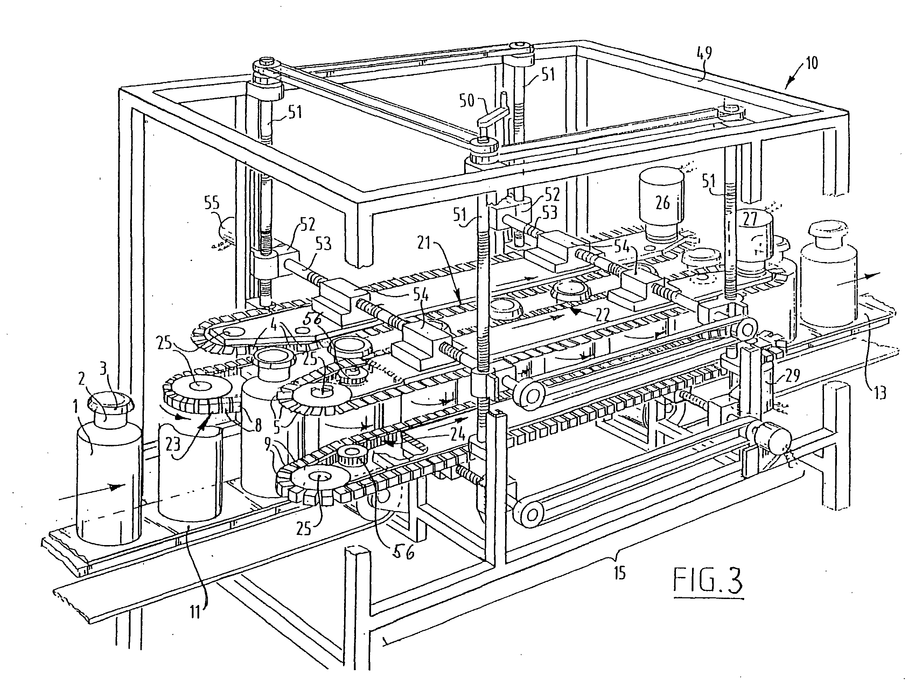

Figur 1 zeigt eine Flasche 1 mit einem Hals 2, an dessen freiem Ende sich ein Kragen 3 umfangsweise erstreckt. Die Flasche 1 wird gemäß Figur 3 von gummi-elastischen Transportfingern 4, 5 getragen, die Bestandteil von zusammen ein Paar bildenden Endlosförderanlagen sind. Die Transportfinger 4, 5 werden mit unterschiedlichen Geschwindigkeiten V₁, V₂ in Längsrichtung angetrieben, wodurch die Flasche 1 um ihre Achse 6 rotiert, wie mit Pfeil 7 bezeichnet ist. Durch diese Geschwindigkeitsdifferenz V₁ - V₂ wird die Flasche 1 um die Achse 6 gedreht.

Die Flasche wird außerdem seitlich leicht einklemmend von weiteren Transportfingern 8, 9, unterstützt, die Bestandteil eines zweiten Paars von endlosen Förderern sind und Pendelbewegungen der Flasche 1 in allen Richtungen verhindert.

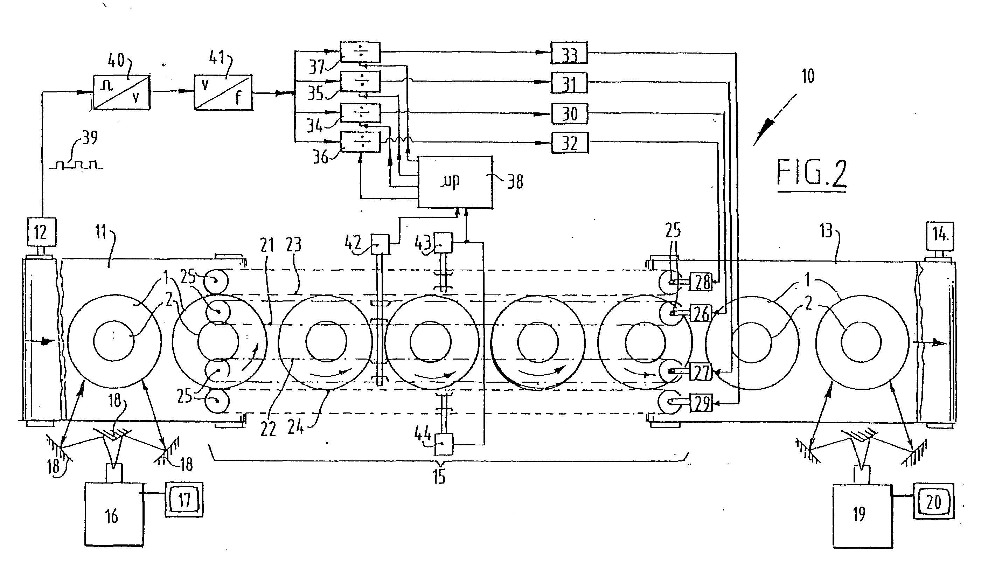

Die Transportfinger 8, 9 werden mit solchen Geschwindigkeiten V3 und V4 angetrieben, daß die Ausrichtung der Achse 6 der Flaschen 1 beibehalten wird. Figur 2 zeigt in der Draufsicht eine Inspektionsvorrichtung 10 zur auf einanderfolgenden Inspektion der Flaschen 1. Die Vorrichtung umfaßt ein Zufuhrförderband 11, das von einem Motor 12 angetrieben wird, ein Abfuhrförderband 13, das von einem Motor 14 angetrieben wird, und einen Zwischenförderer 15, der zwischen das Zufuhrförderband 11 und das Abfuhrförderband 13 eingesetzt ist.

Neben dem Zufuhrförderband 11 ist eine Videokamera 16 mit dazu gehörendem Videomonitor 17 angeordnet. Der Kamera 16 ist ein optisches System aus vier Spiegeln 18 zugeordnet, das auf einem einzigen Videobild zwei Abbildungen aus unterschiedlichen Blickwinkeln auf die Videokamera 16 projizieren kann. Beispielsweise können zwei Blickwinkel ungefähr 90° voneinander abweichen. Bei durchsichtigen Flaschen 1 kann dadurch sowohl die Vorder- als auch die Rückseite einer Flasche in einem einzigen Arbeitsgang inspiziert werden.

Neben dem Abfuhrförderband 13 ist eine zweite Videokamera 19 mit dazu gehörendem Monitor 20 angeordnet. Dieser Kamera 19 ist ebenfalls ein System aus vier Spiegeln zugeordnet, die identisch mit dem System der Spiegel 18 sind. Durch die Rotation der Flaschen 1 durch den Zwischenförderer 15 beobachtet die Videokamera 19 jede Flasche 1 unter einem Winkel, der um 90° von dem Winkel abweicht, unter dem die Videokamera 16 dieselbe Flasche beobachtet hat. Auf diese Weise können mit der bereits beschriebenen Anordnung der Spiegel, die beiden Kameras 16, 19 zusammen eine durchsichtige Flasche in einem einzigen Durchlauf von allen Seiten inspizieren.

Die Flaschen 1 werden von dem Zwischenförderer an deren Kragen 3 getragen, und zwar von einem Paar oberen Endlosförderern 21, 22, die die Finger 3 beziehungsweise 5 tragen, und von einem Paar unteren Endlosförderern 23, 24, die die Finger 8 beziehungsweise 9 tragen. Die Förderer 21, 22, 23, 24 werden über allgemein mit 25 bezeichnete Rollen von Motoren 26, 27, 28 beziehungsweise 29 angetrieben, die von Antrieben 30, 31, 32 beziehungsweise 33 aus gesteuert werden. Diese erhalten Steuerungssignale von dazu gehörenden programmierbaren Teilern 34, 35, 36, 37, die ihrerseits Steuerungssignale von einem Mikroprozessor 38 und der Geschwindigkeit des Zufuhrförderbands 11 entsprechende Signale erhalten. Diese Geschwindigkeitssignale werden von einem mit dem Antriebsmotor 12 gekoppelten, nicht dargestellten Tachometer erzeugt, der Impulsreihen 39 abgibt und dessen Impulsfrequenz für die Drehzahl des Motors 12 repräsentativ ist und damit für die Lineargeschwindigkeit des Zufuhrförderbands 11. Ein Impulsfrequenzspannungswandler 40 wandelt das Signal 39 in ein Spannungssignal um, das seinerseits durch einen Spannungsfrequenzwandler 41 in ein Frequenzsignal umgewandelt wird, das als Steuerungssignal den Teilern 34, 35, 36, 37 zugeleitet wird. Die Geschwindigkeit des Zwischenförderers 15 braucht nicht exakt mit der des Zufuhrtransportbandes 11 übereinzustimmen. Es reicht aus, wenn die fraglichen Geschwindigkeiten nicht allzu stark voneinander abweichen, beispielsweise höchsten um einige Prozente.

Die Schaltung mit den Umwandlern 41 und 42 ermöglicht es, auch mit extrem kleinen Geschwindigkeiten des Zufuhrförderbands 11 dennoch eine genaue Steuerung zu erhalten. Das Ausgangssignal des Wandlers 41 kann in Abhängigkeit von der Geschwindigkeit des Förderbands 11 beispielsweise zwischen 0 und 1 MHz variieren.

Die Motore 26, 27, 28, 29 können Schrittmotore sein, wodurch mit sehr einfachen Mitteln eine sehr hohe Transportgenauigkeit realisiert werden kann. Die Motore können auch mit Servosteuerung verwendet werden. In den Mikroprozessor 38 wird vorher die effektive Länge des Zwischenförderers 15 eingegeben. Wie deutlich sein wird, ist es bei abweichenden effektiven Längen der Paare 21, 22 und 23, 24 von Endlosförderern ausreichend, die effektive Länge des längeren der beiden Paare in den Mikroprozessor als Fixinformation einzugeben. Weiter muß der gewünschte Rotationswinkel der Flaschen 1 vorher in den Mikroprozessor 38 eingegeben werden. In dem beschriebenen Ausführungsbeispiel ist die Rotationswinkel 90°.

Weiter muß der Mikroprozessor 38 Informationen in bezug auf die Umfangsform der Flaschen 2 auf der Höhe erhalten, an der die Paare der endlosen Förderer 21, 22 bzw, 23, 24 angreifen.

Da die Flaschen 1 rotationssymmetrisch sind, ist es ausreichend, wenn der Durchmesser der Flaschen 1 auf der Angriffshöhe der Finger 4, 5 und 8, 9 nach Figur 1 gemessen wird und als Information in den Mikroprozessor 38 eingegeben wird.

Figur 2 zeigt Verstellungssensoren 42, 43, 44 für die seitliche Position der endlosen Förderer 21, 22 beziehungsweise der endlosen Förderer 23, 24.

Der Zwischenförderer 15 umfaßt einen Tragerahmen 49 mit vier mittels eines Handgriffs 50 drehbaren Schraubspindeln 51, mit denen die Wagen 52 zusammenwirken, die durch Bedienung des Handgriffs gemeinsam auf- und abbewegbar sind.

Die Wagen 52 tragen und führen ihrerseits Schraubspindeln 53 mit zwei gegenläufigen Schraubgewinden, womit allgemein mit 54 bezeichnete Wagen zusammenwirken. Durch Drehung der Schraubspindeln 53 durch den gemeinsamen Antriebsmtor 55 können die Wagen 54 von einander weg und auf einander zu bewegt werden. Die Wagen 54 tragen die Rollen 25 und die Motoren 26, 27. Die beschriebene Konstruktion macht eine senkrechte gemeinsame Verlagerung der oberen Förderer 21, 22 möglich, sowie eine gegenläufig ausgerichtete waagerechte Verstellung.

Die unteren Förderer 23, 24 sind in derselben Weise bewegbar. Die verstellbare Konstruktion für die oberen Förderer 21, 22 ist im Detail beschrieben. Die Verstellbarkeit der unteren Förderer 23, 24 wird deshalb mit Bezugnahme auf Figur 3 unerörtert gelassen. Die senkrechte Position der unteren Förderer 23, 24 ist fest.

Rollen 56 befinden sich sowohl am Einfuhrende wie am Ausfuhrende des Zwischenförderers 15 nahe den Rollen 25. Wie die Figur 3 deutlich zeigt, wird damit eine "suchende" und sehr zuverlässige Einleitung der Flaschen 1 in den Zwischenförderer 15 gewährleistet.

## Patentansprüche

1. Vorrichtung zur fortlaufenden Inspektion zugeführter gleicher, rotationssymmetrischer, durchsichtiger Gegenstände (1),
mit einer Zufuhrförderanlage (11, 12) zur aufeinanderfolgenden Zufuhr der Gegenstände (1);
mit einer neben der Zufuhrförderanlage (11, 12) angeordneten ersten Inspektionsstation (16, 17, 18) zum Inspizieren der zwischen der Rotationsachse und der Inspektionsstation befindlichen Wand und der auf der anderen Seite der Rotationsachse befindlichen Wand der passierenden Gegenstände (1) von der Seite und zur Abgabe eines das Inspektionsergebnis wiedergebenden Inspektionssignals;
mit einer Abfuhrförderanlage (13, 14) zur Abfuhr der Gegenstände (1);
mit einer neben der Abfuhrförderanlage (13, 14) angeordneten zweiten Inspektionsstation (19, 20) zum Inspizieren der zwischen der Rotationsachse und der Inspektionsstation befindlichen Wand und der auf der anderen Seite der Rotationsachse befindlichen Wand der passierenden Gegenstände (1) von der Seite und zur Abgabe eines das Inspektionsergebnis wiedergebenden Inspektionssignals, und
daß dadurch gekennzeichnet, wenigstens zwei Paare von Endlosförderern (21, 22; 23, 24) vosgesehen sind, die jeden der Gegenstände (1) auf beiden Seiten in unterschiedlicher Höhe erfassen, so daß Pendelbewegungen der Gegenstände (1) effektiv vermieden werden, wobei die Endlosförderer (21, 22; 23, 24) jeweils mittels individueller Antriebsmittel (26 bis 29) mit unterschiedlichen Geschwindigkeiten (V₁, V₂; V₃, V₄) angetrieben werden, so daß die Gegenstände (1) um einen vorgegebenen Winkel um ihre Symmetrieachse gedreht werden, und die Geschwindigkeiten der Endlosförderer (21, 22; 23, 24) in Abhängigkeit von dem Durchmesser der Gegenstände (1) in Angriffshöhe der Endlosförderer (21, 22; 23, 24), dem Drehwinkel der Gegenstände (1) und der Länge der Endlosförderer (21, 22; 23, 24) gewählt sind,
daß die zwei Paare von Endlosförderern (21, 22; 23, 24) als Zwischenförderanlage (15) zwischen der Zuführförderanlage (11, 12) und der Abfuhrförderanlage (13, 14) angeordnet sind,
daß im Bereich der Zwischenförderanlage (15) eine Einrichtung zur Bodeninspektion in Form einer genan zeitgesteuerten Blitzbelenchtung vorgesehen ist und
daß der vorgegebene Winkel, um den die Gegenstände (1) gedreht werden, 90° beträgt, so daß mittels der beiden Inspektionsstationen (16, 17, 18; 19, 20) ein vollständiges Bild von den Gegenständen erhalten wird.

## Claims

1. A device for the continuous inspection of identical, rotationally symmetrical, transparent articles (1) on a conveyor,
having an input conveyor system (11,12) for sequential supply of the articles (1);
having a first inspection station (16,17,18) arranged next to the input conveyor system (11,12) for inspecting, from the side, the wall of the passing articles (1) that is located between the axis of rotation and the inspection station and the wall of the passing articles (1) that is located on the other side of the axis of rotation and for delivering an inspection signal representing the inspection result;
having an output conveyor system (13,14) for discharging the articles (1);
having a second inspection station (19, 20) arranged next to the output conveyor system (13, 14) for inspecting, from the side, the wall of the passing articles (1) that is located between the axis of rotation and the inspection station and the wall of the passing articles (1) that is located on the other side of the axis of rotation and for delivering an inspection signal representing the inspection result, and
characterised in that
at least two pairs of endless conveyors (21, 22; 23, 24) are provided, which grip each of the articles (1) on both sides at different heights so that oscillating movements of the articles (1) are effectively avoided, the endless conveyors (21, 22; 23, 24) each being driven by means of individual drive means (26 to 29) at different speeds (V₁, V₂; V₃, V₄), so that the articles (1) are rotated through a given
angle about their axis of symmetry, and the speeds of the endless conveyors (21, 22; 23, 24) are selected in dependence on the diameter of the articles (1) at the engagement height of the endless conveyors (21, 22; 23, 24), the angle of rotation of the articles (1) and the length of the endless conveyors (21, 22; 23, 24),
the two pairs of endless conveyors (21, 22; 23, 24) are arranged as an intermediate conveyor system (15) between the input conveyor system (11,12) and the output conveyor system (13,14),
in the region of the intermediate conveyor system (15) there is provided an arrangement for inspecting the bottom of the articles in the form of an accurately time-controlled flash illumination, and
the prescribed angle through which the articles (1) are rotated is 90°, so that by means of the two inspection stations (16, 17, 18; 19, 20) a complete image of the articles is obtained.

## Revendications

1. Dispositif pour inspecter en continu des objets (1) transparents ou translucides qui sont amenés à celui-ci et sont identiques et à symétrie de révolution, comprenant
un transporteur d'alimentation (11, 12) pour amener successivement des objets (1) ;
une première station d'inspection (16, 17, 18) disposés à côté du transporteur d'alimentation (11, 12) pour inspecter par le côté la paroi des objets (1) passant qui est située entre l'axe de rotation et la station d'inspection et leur paroi située de l'autre côté de l'axe de rotation et pour émettre un signal d'inspection donnant le résultat d'inspection ;
un transporteur d'évacuation (13, 14) pour l'évacuation des objets (1) ;
une deuxième station d'inspection (19, 20) disposée à côté du transporteur d'évacuation (13, 14) pour inspecter par le côté la paroi des objets (1) passant qui est située entre l'axe de rotation et la station d'inspection et leur paroi située de l'autre côté de l'axe de rotation et pour émettre un signal d'inspection donnant le résultat de l'inspection,
caractérisé
en ce qu'il est prévu au moins deux paires de transporteurs continus (21, 22 ; 23, 24) qui saisissent chacun des objets (1) des deux côtés à des niveaux différents, de sorte que des mouvements oscillants des objets (1) sont évités d'une manière effective, les transporteurs continus (21, 22 ; 23, 24) étant entraînés chacun à l'aide de moyens d'entraînement (26 à 29) individuels respectifs à des vitesses différentes (V1, V2 ; V3, V4), de sorte que les objets (1) font l'objet d'une rotation, d'un angle prédéterminé, autour de leur axe de symétrie, et les vitesses des transporteurs continus (21, 22 ; 23, 24) sont choisies en fonction du diamètre des objets (1) au niveau d'application des transporteurs continus (21, 22 ; 23, 24), de l'angle de rotation des objets (1) et de la longueur des transporteurs continus (21, 22 ; 23, 24),
en ce que les deux paires de transporteurs continus (21, 22 ; 23, 24) sont disposées comme transporteur intermédiaire (15) entre le transporteur d'alimentation (11, 12) et le transporteur d'évacuation (13, 14),
en ce que, dans la zone du transporteur intermédiaire (15), il est prévu un dispositif d'inspection de fond se présentant sous forme d'un éclairage à flash commandé dans le temps et
en ce que l'angle prédéterminé dont les objets (1) sont déplacés en rotation vaut 90°, de sorte qu'au moyen des deux stations d'inspection (16, 17, 18 ; 19, 20), on obtient une image complète des objets.
